# EUROPEAN PATENT SPECIFICATION

(11) **EP 3 427 573 B1**
(45) Date of publication and mention of the grant of the patent: **14.04.2021**
(21) Application number: 18181865.9
(22) Date of filing: 05.07.2018
(51) Int. Cl.: A01G 25/09

(54) **SELF-PROPELLED TOWER FOR IRRIGATION SYSTEMS**
SELBSTFAHRENDER TURM FÜR BEWÄSSERUNGSSYSTEME
COLONNE AUTOPROPULSÉE POUR SYSTÈMES D'IRRIGATION

(30) Priority: 13.07.2017 IT 201700078944
(43) Date of publication of application: 16.01.2019
(73) Proprietor: Ocmis Irrigazione S.P.A., 41014 Castelvetro di Modena (Modena) (IT)
(72) Inventor: COLLI, Roberto, 41014 Castelvetro di Modena (Modena) (IT)
(74) Representative: Gagliardelli, Fabrizio

(56) References cited:
- WO-A1-2013/191738
- AU-A1- 2008 202 665
- US-A- 4 163 459
- US-A- 4 180 092
- US-A- 4 277 027

## Description

This invention relates to the field of agricultural irrigation systems. More specifically, this invention relates to a self-propelled tower for irrigation systems.

Linear or racecourse irrigators are known wherein a self-propelled tower is connected to a span irrigation system comprising a plurality of spans, a conduit supported by the above-mentioned spans, a series of spray nozzles connected to the conduit and a series of motor-driven supporting elements which delimit and support the above-mentioned spans.

In this type of irrigator, the self-propelled tower moves along a fixed direction for the entire length of the ground to be irrigated and reverses the direction of travel when it reaches the limit of the above-mentioned ground, whilst the spans and the motor-driven supporting elements which support them follow the self-propelled tower in its movement along a trajectory parallel to it.

More specifically, in the racecourse irrigators an end of the plurality of spans is hinged to the self-propelled tower. The self-propelled tower moves linearly along the agricultural land and stops its motion in the vicinity of one end of it. The plurality of spans follows the movement of the tower parallel to it, in a similar manner to the linear irrigators, spraying a portion of land. After the tower stops, unlike what happens with the linear irrigators, the plurality of spans continues its movement and each motor-driven supporting element adopts a different speed in such a way that the plurality of spans can describe a semicircle having the self-propelled tower as the centre. After the plurality of spans has completed the semicircle, the self-propelled tower returns to its movement along the same direction which it had previously but in the opposite direction and the plurality of spans follows parallel to it in such a way as to irrigate a portion of land parallel and adjacent to that sprayed in the previous passage.

In order to be able to perform its function, the self-propelled tower is connected to a source of water, the water being conveyed from the tower and delivered in the conduit of the spans to be sprayed. The above-mentioned water source may consist of a chamber or a channel, adjacent to the path of the tower; in any case, use is made of supply pipe in fluid-dynamic communication between the source and the tower and dragged by the latter along the path followed by the tower.

The operational principle of the linear or racecourse irrigators comprises a reversal of the direction of travel of the self-propelled tower at each end of the land to be sprayed. Disadvantageously, the above-mentioned reversal results in an inversion of the relative position of the supply pipe with respect to the self-propelled tower: if, in fact, the pipe were dragged by the tower and arranged behind it, after the reversal it would be in front of the tower and pushed by it, with the risk that the above-mentioned problems occur.

In order to overcome these drawbacks, the prior art comprises the construction of self-propelled towers equipped with a rear connector and a front connector for the supply pipe, wherein the operators, upon each reversal of the direction of travel, disconnect the above-mentioned pipe from one side and attach it to the other, paying attention to the orientation of the pipe on the ground. Disadvantageously, this feature involves the use of personnel, loss of time and the risks resulting from human error. AU2008202665 discloses a swivel inlet hose-drag cart for a linear irrigation system including a main water line, having first and second ends, supported upon a plurality of spaced apart drive units. The cart comprises: a wheeled frame means having first and second ends, an inner side and an outer side; a support structure on the frame means having lower and upper ends; the first end of the main water line being supported upon the upper end of said support structure. Also an upstanding riser pipe, is provided, having upper and lower ends, on the frame means and the upper end of the riser pipe being fluidly connected to the inner end of the main water line. Moreover, a first tubular elbow having an upper end portion with an upper end and a lower end portion with an outer end is provided and the lower end portion of the first tubular elbow extends laterally from the upper end portion of the first tubular elbow so as to extend towards the outer side of the wheeled frame means, while a second tubular elbow has an upper end portion with an inner end and a lower end portion with a lower end.

In this context, the technical purpose which forms the basis of this invention is to provide a self-propelled tower for irrigation systems which overcomes at least some of the above-mentioned drawbacks of the prior art.

More specifically, the aim of this invention to provide a self-propelled tower for irrigation systems which is able to guarantee the correct movement of the water supply pipe during the irrigation process and, in particular, the reversal of the direction of travel of the self-propelled tower.

The technical purpose indicated and the aims specified are substantially achieved by a self-propelled tower for irrigation systems comprising the technical features described in one or more of the accompanying claims. Further features and advantages of this invention are more apparent from the non-limiting description which follows of a preferred, non-limiting embodiment of a self-propelled tower for irrigation systems as illustrated in the accompanying drawings, in which:
- Figure 1 is a perspective view of a self-propelled tower according to the present invention;
- Figure 2 is a top view of the self-propelled tower of Figure 1;
- Figure 3 is a side view of the self-propelled tower of Figure 1;
- Figure 4 is a front view of an operating configuration of the self-propelled tower of Figure 1 connected to a span irrigation system;
- Figure 4A shows an enlargement of Figure 4;

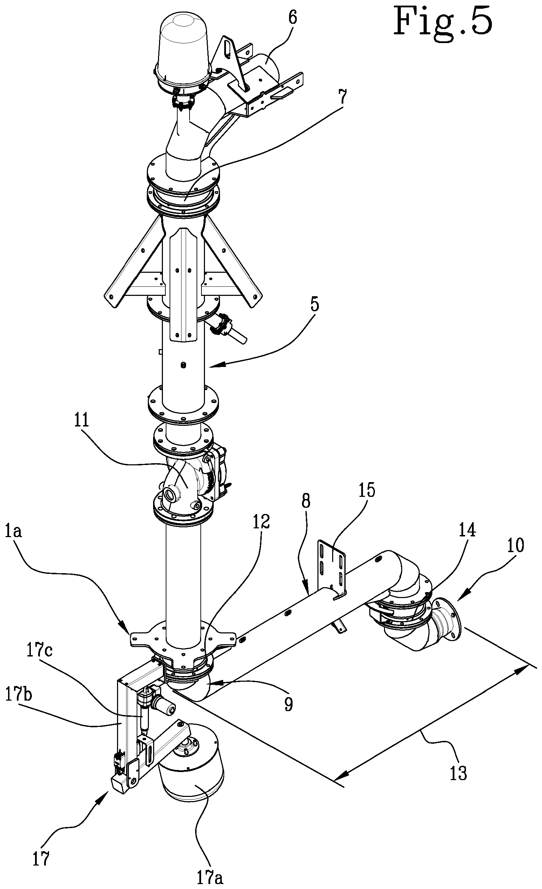

- Figure 5 is a perspective view of a part of the self-propelled tower of Figure 1;

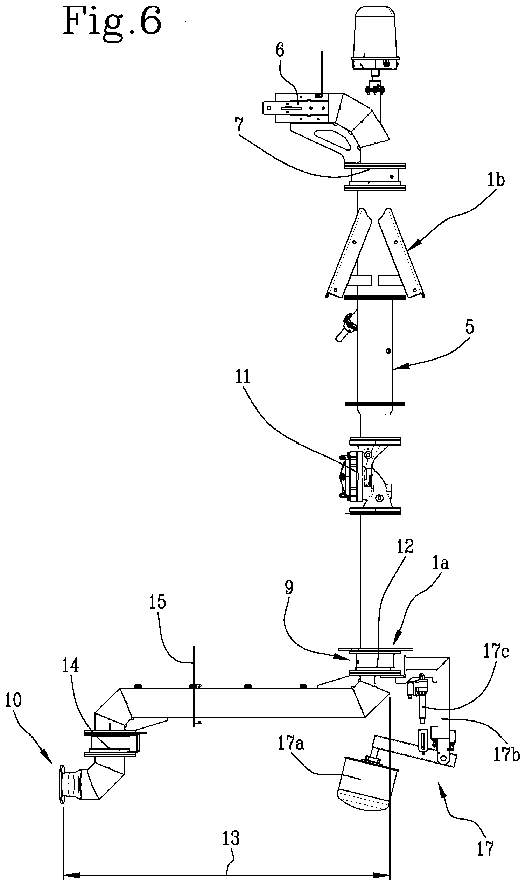

- Figure 6 is a side view of the part of Figure 5;
- Figures 7A to 7F show a series of operating configurations of a self-propelled tower according to this invention and a supply pipe connectable to it.

With reference to the accompanying drawings, a self-propelled tower for irrigation systems, according to the invention, configured for being part of a linear irrigation system, is denoted in its entirety by the numeral 1.

It should be noted that the invention, even though it has been especially designed for use in racecourse irrigators, could also be used with other linear irrigators which move periodically between two end points of a linear path.

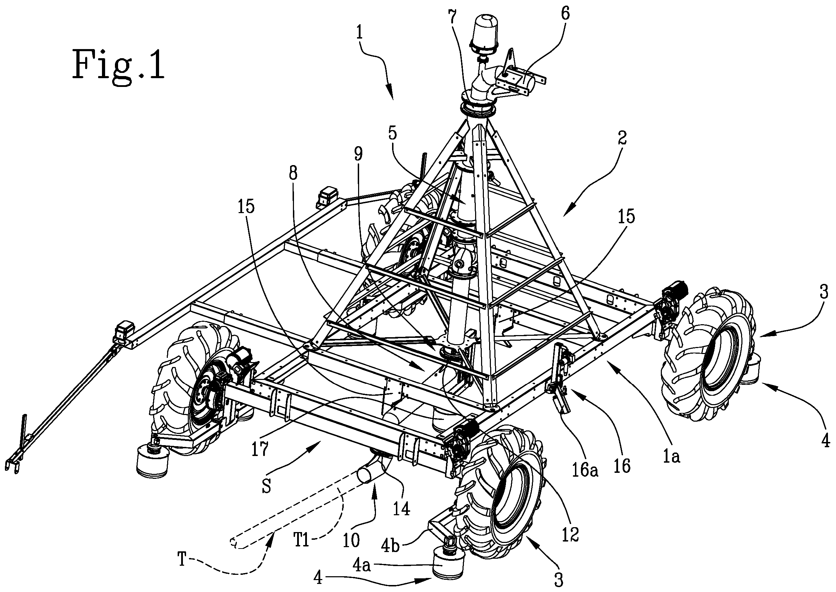

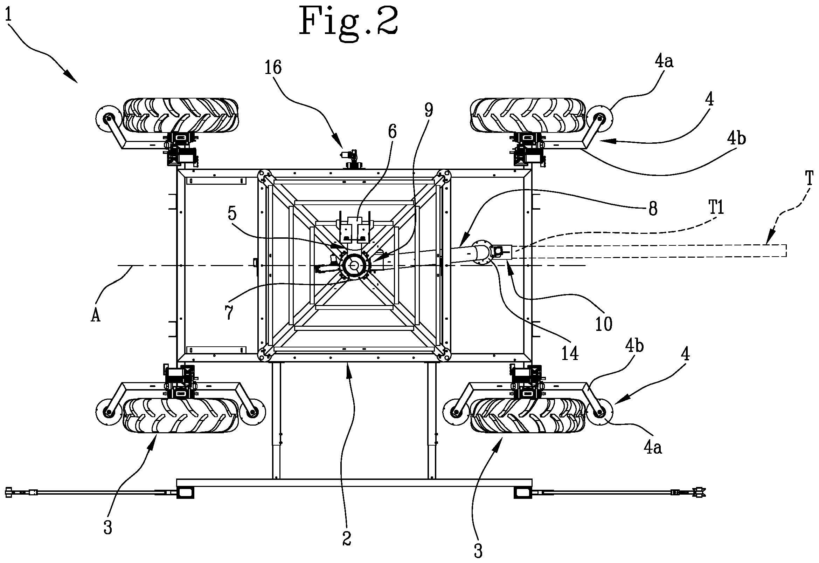

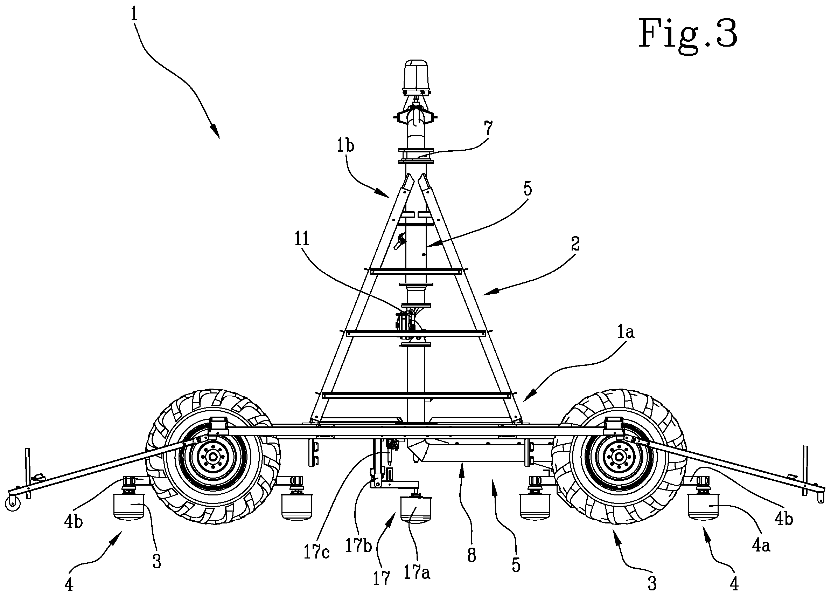

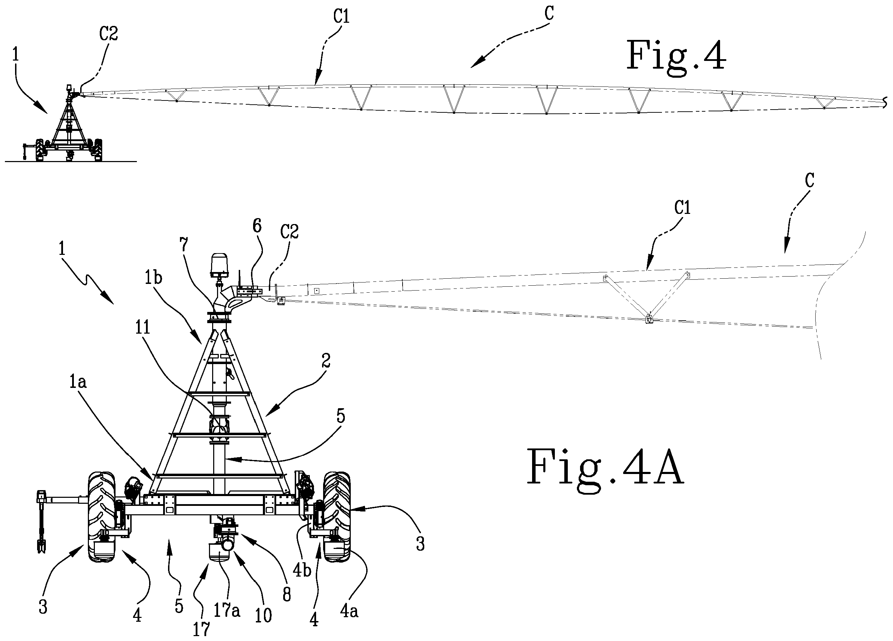

The self-propelled tower 1, illustrated in Figures 1 to 4, is configured to move on an agricultural land along a direction of travel "A", following a straight trajectory and pulling behind a supply pipe "T" extended along the ground. The self-propelled tower 1 is also configured to perform a reversal of the direction of travel at the end of the rectilinear trajectory. The function of the supply pipe "T" is to connect the self-propelled tower 1 with a source of liquid for the irrigation.

The self-propelled tower 1 comprises a supporting frame 2, preferably with a rectangular supporting base, supporting components making up the tower, and movement means connected to the frame 2.

Preferably, the movement means comprise a plurality of wheels 3, preferably four and each positioned at a vertex of the rectangular plan of the frame 2. The above-mentioned movement means also comprise a motor apparatus, preferably connected to the wheels 3, for transmitting a traction, and a system for controlling the traction configured to control the rotation of a first pair of wheels independently of that of a second pair of wheels. The traction control system has the purpose of controlling the rotation of the above-mentioned wheels 3 in such a way that the self-propelled tower 1 can to keep, in use, a rectilinear trajectory following movements and stresses, in particular transmitted to it by the supply pipe "T" as a result of its friction with the agricultural land.

The self-propelled tower 1 comprises at least one lateral displacing device 4 for each wheel 3, positioned along a direction of travel of the wheel 3 and configured for making contact with the supply pipe "T" to divert it laterally and prevent an interference with the wheel 3.

In the embodiment illustrated the self-propelled tower 1 comprises a lateral displacing device 4 for each wheel 3 positioned along a long side of the rectangular base. More specifically, these displacing devices 4 are oriented outside the rectangular base of the self-propelled tower 1. For the wheels 3 positioned along a long side opposite the one mentioned above, the self-propelled tower 1 comprises two lateral displacing devices 4 for each wheel 3, positioned at each side of the wheel along its direction of travel.

In at least one embodiment, each lateral displacing device 4 comprises a first idle roller 4a and an arm 4b for the connection of the first idle roller 4a to the frame 2. Each first idle roller 4a is, in use, positioned close to of the agricultural land, preferably perpendicularly to it, and has a rounded lower surface to facilitate a sliding on the agricultural land in the case of contact with it. Preferably, each arm 4b is connected to the frame 2 in such a way as to absorb, in use, any accidental impact of the respective first idle roller 4a with the ground and allow them to move to prevent catching in the presence of irregularities of the agricultural land. In the embodiment illustrated the arms 4b are hinged to the frame 2 in such a way as to rotate with an axis of rotation parallel to that of the wheels 3 and allow a freedom of movement to the idle rollers 4a and facilitate the overcoming of any obstacles along the ground.

Advantageously, the self-propelled tower 1 defines a passage space "S" which, in use, is parallel to the agricultural land and designed for a passage of the supply pipe "T". In the embodiment illustrated, the above-mentioned space "S" is delimited, with reference to the configuration of use of the self-propelled tower 1, at the top by the frame 2, laterally by the wheels 3 and by the lateral displacing devices 4, at the bottom by an area of agricultural land on which the self-propelled tower 1 is operating.

The self-propelled tower 1 also comprises a pipe 5, supported by the frame 2. In the embodiment illustrated the pipe 5 is positioned vertically between a lower portion 1a and an upper portion 1b of the self-propelled tower 1. The pipe 5 is configured to receive as input a irrigation liquid at the lower portion 1a and convey it in a conduit "C1" of a span irrigation system "C" connectable to the self-propelled tower 1. For this purpose the pipe 5 comprises, at the upper portion 1b, an end portion 6 configured for a reversible and fluid-sealed connection with a respective end "C2" of the conduit "C1". Preferably, the above-mentioned connection allows a transmission of structural loads between the self-propelled tower 1 and the span irrigation system "C", in such a way that the self-propelled tower 1 can support the latter. The pipe 5 also comprises a hinge 7, preferably flat, in such a way as to allow the rotation of the end portion 6 of the pipe 5 relative to the frame 2. The hinge 7 is configured for allowing a rotation of the span irrigation system "C" with respect to the self-propelled tower 1, the above-mentioned rotation being an operational step of the linear irrigators.

The self-propelled tower 1 comprises, at the lower portion 1a, a sleeve 8, in turn comprising a first end portion 9 and a second end portion 10. The first end portion 9 is connected to the pipe 5 and the second end portion 10 is configured for a reversible and fluid-sealed connection with a respective end portion "T1" of the supply pipe "T", designed to provide a water supply to the irrigation system.

The sleeve 8 is configured to allow the flowing of the irrigation liquid between the second end portion 10 and the first end portion 9. More specifically, the sleeve 8 and the pipe 5 are, in use, configured to establish a flow communication between the supply pipe "T" and the conduit "C1", giving flow rate and pressure characteristics to the water flow designed for irrigating agricultural land.

It should be noted that the self-propelled tower 1 preferably comprises a hydraulic valve 11 for regulating (and if necessary stopping) the pressure of the irrigation liquid.

The sleeve 8 comprises a first joint 12, at the first end portion 9, and a mobile portion 13, extending between the first joint 12 and the second end portion 10. Advantageously, the first joint 12 allows a rotation of the mobile portion 13 relative to the first end portion 9, inside the passage space "S". Again the mobile portion 13 comprises a second joint 14 at the second end portion 10, to allow a rotation inside the passage space "S", in such a way that it can, in use, be aligned with the supply pipe "T" without an excessive bending moment being created along the supply pipe "T" or the sleeve 8.

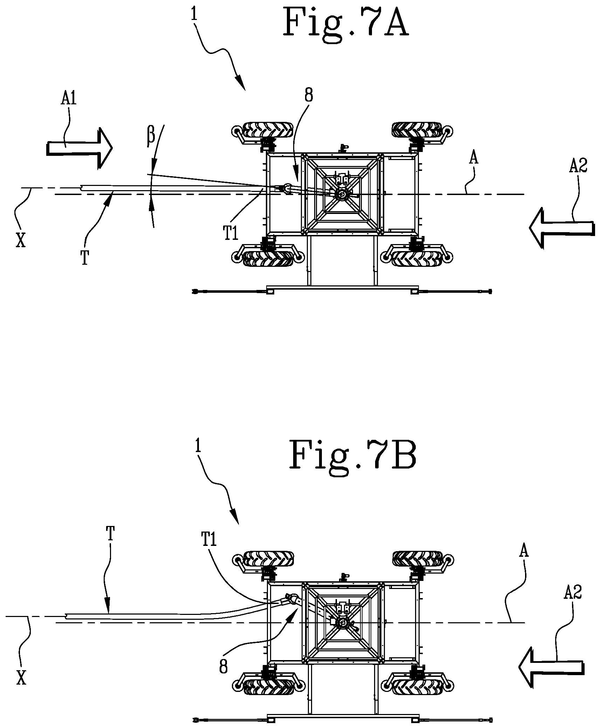

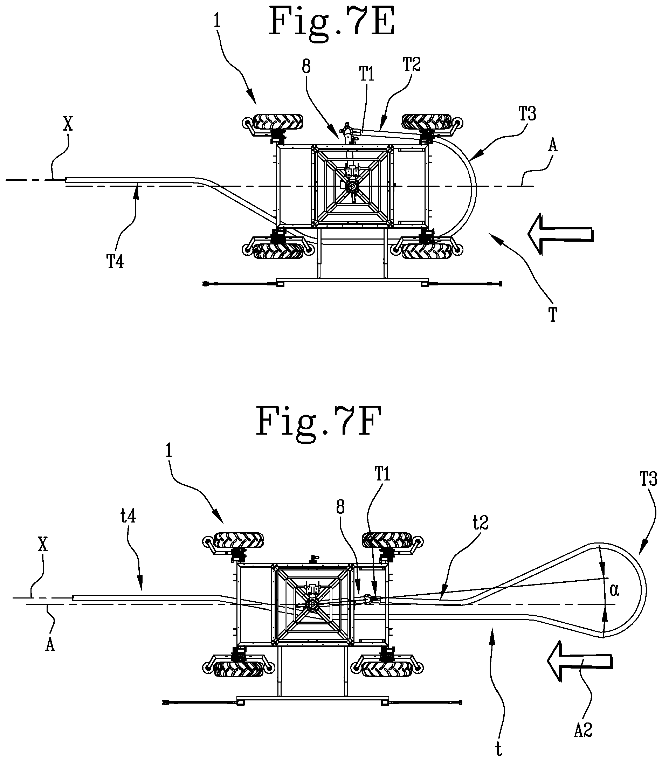

The self-propelled tower 1 comprises a constraining mechanism configured to oppose, preferably limit, the rotation of the mobile portion 13 to an angle of less than 180°. In at least one embodiment, the above-mentioned constraining mechanism comprises two reciprocal end stops 15. Preferably, each end stop 15 comprises a stop element and the mobile portion 13 is configured for making contact with it. In the embodiment illustrated, the end stops 15 are positioned on the frame 2 in such a way as to limit the rotation of the mobile portion 13 to an angle of less than 180°. More specifically, they limit the above-mentioned rotation between two limit positions: one limit position defines an angle β greater than 0° between the mobile portion 13 and the direction of travel "A" of the self-propelled tower 1 (Figure 7A) and the other limit position defines an angle γ less than 180° between the mobile portion 13 and the direction of travel "A" of the self-propelled tower 1 (Figure 7F).

The constraining mechanism is configured for two purposes. A first aim is to oppose the rotation of the mobile portion 13 in such a way it is angularly spaced from the direction of travel "A" of the self-propelled tower 1. More specifically, the angular distance between the mobile portion 13 and the direction of travel "A" of the self-propelled tower 1 is defined by an angle between the latter and a main axis of extension of the stretch of the mobile portion 13 between the first joint 12 and the second joint 14. The reason for this limitation is to prevent a configuration of the first joint 12 wherein the mobile portion 13 is positioned parallel to the direction of travel of the self-propelled tower 1 due to the dragging of the supply pipe "T".

A second aim of the end stops 15 is to ensure that the above-mentioned rotation of the mobile portion 13 always affects a same portion of the passage space "S".

A preferred embodiment of the self-propelled tower 1 comprises a rotation opposing system 16, connected to the frame 2 and operating on the first joint 12. More specifically, the rotation opposing system 16 operates on the rotation of the mobile portion 13 with respect to the first end portion 9 and selectively defines a free rotation configuration and an opposed rotation configuration. In the embodiment illustrated, the rotation opposing system 16 comprises an abutment element 16a designed to make contact with the mobile portion 13. The abutment element 16a can be moved between a blocked position and a released position. In the blocking position, corresponding to the opposed rotation configuration, the abutment element 16a is configured for making contact against the mobile portion 13 of the sleeve 8. In the released position, corresponding to the free rotation configuration, the abutment element 16a is configured for not coming into contact with the sleeve 8.

The self-propelled tower 1 comprises a central displacing device 17, which can be moved between an activation configuration and a deactivation configuration. In the activation configuration, the central displacing device 17 is positioned to partly obstruct the passage space "S" and is configured for making contact with the supply pipe "T", lying on the agricultural land. Coming into contact with the supply pipe "T", the central displacing device 17 displaces it laterally relative to the direction of travel "A" of the self-propelled tower 1. In the deactivation configuration, the central displacing device 17 is configured so as not to interfere with the supply pipe "T". In the embodiment illustrated, the central displacing device 17 comprises a second idle roller 17a, a linkage 17b for the connection of the second idle roller 17a to the frame 2, and a movement system configured to actuate a movement of the second idle roller 17a between an activation position and a deactivation position. Preferably, the above-mentioned movement system comprises a linear actuator 17c connected to the linkage 17b.

In the activation position, corresponding to the configuration for activating the central displacing device 17, the second idle roller 17a is oriented perpendicularly to the agricultural land, preferably close to it. In the deactivation position, corresponding to the configuration for deactivating the central displacing device, the second idle roller 17a is spaced from the agricultural land in such a way as not to interfere with a passage of the supply pipe "T" below it.

Preferably, the linkage 17b is connected to the frame 2 in such a way as to absorb any accidental impact of the second idle roller 17a with the ground. Again preferably, the second idle roller has a lower surface 17a which is flared to facilitate a sliding on the agricultural land in the case of contact with it.

Advantageously, the movement system of the central displacing device 17, in particular the actuator 17c, is coordinated with the rotation opposing system 16, in such a way that the configuration for deactivating the first corresponds to a configuration of opposed rotation of the second and that the configuration for activating the first corresponds to a configuration of free rotation of the second.

The self-propelled tower 1 is configured to perform the above-mentioned reversal of the direction of travel and, simultaneously, dragging behind the supply pipe "T", in such a way that this, sliding on the ground, gradually forms a curve along its main axis of extension and remains in an orderly fashion positioned along the ground, without overlapping between different portions of the pipe and without interfering with parts of the self-propelled tower 1.

In use, during the movement of the self-propelled tower 1 and after a long enough period, the supply pipe "T" is positioned behind the self-propelled tower 1 and its main axis of extension is rectilinear and positioned along an axis "X", parallel to the direction of travel "A" of the self-propelled tower 1. Sliding the supply pipe "T" generates friction with the ground. The mobile portion 13, connected to the supply pipe "T", is positioned in contact with one of the two end stops 15 and maintained in position by a reaction force exerted on it by the supply pipe "T" connected to the second end portion 10. In effect, the above-mentioned reaction force exerts a torque on the mobile portion 13 which tends to align the mobile portion 13 to the direction of travel "A". The end stop 15 is positioned in such a way as to oppose the above-mentioned torque and keep the mobile portion 13 misaligned from the direction of travel "A". Preferably the angle β determined by the end stop 15 between the mobile portion 13 and the direction of travel "A" is less than 5°, in such a way as to not excessively stress in a shear fashion the mobile portion 13 and the end stop 15.

In order to perform the reversal of the direction of travel of the self-propelled tower 1 which initially proceeds in a direction of travel "A1", it stops with the above-mentioned parts positioned as described (Figure 7A). This arrangement is stable with respect to a movement of the self-propelled tower 1 according to the direction of travel "A1" such that the supply pipe "T" is positioned behind the above-mentioned self-propelled tower 1 and is unstable with respect to a movement of the self-propelled tower 1 according to an opposite direction of travel "A2".

A first step of the process for reversal of the direction of travel starts with the start of a movement of the self-propelled tower 1 according to the direction of travel "A2". As a result of the reversal of the direction of travel, the supply pipe "T" previously positioned behind the self-propelled tower 1 is now positioned in front of it. The friction force between the supply pipe "T" and the ground is unloaded, as an axial compressive force directed parallel to the end portion "T1" of the supply pipe "T", on the second end portion 10 of the mobile portion 13. Due to the displacement of the mobile portion 13 with respect to the direction of travel "A" predetermined by the end stops 15, the force which acts on the end portion "T1" of the supply pipe "T" determines a torque on the mobile portion 13 relative to the first joint 12. Following this torque, the mobile portion 13 starts to rotate, moving the second end portion 10 along a circumference inside the passage space "S". Simultaneously, the second joint 14 rotates in the opposite direction to maintain the alignment between the second end portion 10 and the end portion "T1" of the supply pipe "T" (Figure 7B). Advantageously, an effect of the rotation of the mobile portion 13 about the first joint 12 is to increase the torque of the compressive force which acts on the second end portion 10 relative to the first joint 12.

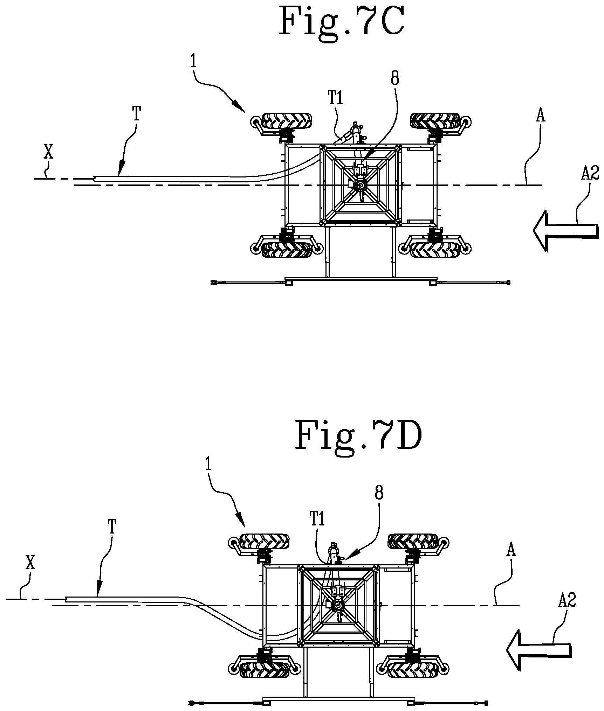

A second step of the process for reversal of the direction of travel (Figure 7C) comprises the blocking of the mobile portion 13 by the rotation opposing system 16. During this step the abutment element 16a which is part of the rotation opposing system 16 is positioned in a blocking position and comes into contact with the mobile portion 13. Advantageously, this blocking occurs by orientation of the first joint 12 which maximises the torque of the compressive force relative to the axis "X". This determines a torque of forces on the supply pipe "T"', consisting, on the one hand, of the friction forces between this and the ground and directed along the axis "X", and, on the other hand, of a reaction force transmitted by the second end portion 10 to the end portion "T1" of the supply pipe "T". This reaction force is parallel to the friction force but not aligned with it. Simultaneously with the torque of forces a dragging effect is determined on the supply pipe "T" of the end portion "T1" of the supply pipe "T" by the mobile portion 13, which is now blocked.

As a result of the dragging effect of the end portion "T1" of the supply pipe "T" and of the torque set up on it, the supply pipe "T" bends and forms a curve along its main axis of extension (Figure 7D), positioned transversally to the axis "X", inside the passage space "S". At the same time, the second joint 14 allows a rotation of the second end portion 10 in such a way that it remains parallel to the end portion "T1" of the supply pipe "T". Advantageously, this makes it possible to limit the bending of the pipe and the shear forces acting on the pipe "T" and on the sleeve 8.

During this step, to allow the passage of the supply pipe "T" beneath the frame 2, the central displacing device 17 is positioned in the deactivation configuration. Again in this step, the lateral displacing devices 4 protect the supply pipe "T" from the movement of the wheels 3 and help the formation of the above-mentioned bend. In the embodiment illustrated, the side of the self-propelled tower 1 comprising two lateral displacing devices 4 per wheel is the one opposite the portion affected by the rotation of the mobile portion 13.

A third step of the process for reversal of the direction of travel starts when the bend of the supply pipe "T" reaches 180° (Figure 7E). During this step a proximal portion "T2" of the supply pipe "T", which has already completed the reversal of the direction of travel, is positioned in a straight line behind the second end portion 10. Continuing the movement of the self-propelled tower 1 according to the direction of travel "A2" the proximal portion "T2" increases continuously following the addition of sections of supply pipe "T" which have completed the reversal. A curved portion "T3", is positioned after the proximal portion "T2", is bent, and comprises sections of the supply pipe "T" which are undergoing the process for reversal of the direction of travel. A distal portion "T4" of the supply pipe "T", positioned after the curved portion "T3" and is still static, at the axis "X", and comprises sections of the supply pipe "T"' which have still not started the process for reversal of the direction of travel. During this step, in order to avoid interference between the proximal portion "T2", the curved portion "T3" and the distal portion "T4", the central displacing device 17 is positioned in an activation configuration, in such a way as to separate the portions "T2", "T3" and "T4" and prevent overlapping which would increase the friction of the supply pipe "T" with the ground and obstruct the passage of the irrigation liquid inside it. Moreover, during this step, the rotation opposing system 16 releases the rotation of the mobile portion 13 in such a way that the first joint 12 can rotate again. Consequently, the mobile portion 13 rotates under the effect of the friction force of the supply pipe "T" until coming into contact with the end stop 15 opposite to the initial one (Figure 7F). In this configuration the mobile portion 13 is again oriented behind the direction of travel of the self-propelled tower 1, preferably forming an angle γ of less than 175° with the axis "X".

This invention achieves the set aim, overcoming the drawbacks of the prior art, since the self-propelled tower 1 has a structure designed to allow an automated reversal of travel of the self-propelled tower 1 and the supply pipe "T" connected thereto and to prevent interference between the different parts of the supply pipe "T" or between the supply pipe "T" and the wheels 3 of the self-propelled tower 1.

## Claims

1. A self-propelled tower (1) for irrigation systems, connectable to a span irrigation system (C), comprising:
- a supporting frame (2);
- movement means connected to the frame (2) for moving the self-propelled tower (1) over agricultural land;
- a pipe (5), supported by the frame (2), comprising an end portion (6) connectable to the span irrigation system (C);
- a sleeve (8) comprising a first end portion (9), connected to the pipe (5), and a second end portion (10), configured for a reversible and fluid-sealed connection with a supply pipe (T);
said sleeve (8) and said pipe (5) being, in use, configured for establishing a flow communication between the supply pipe (T) and the span irrigation system (C), designed for the water supply of the span irrigation system (C);
wherein the self-propelled tower (1) defines, in use, a passage space (S) parallel to the agricultural land sufficient for a passage of the pipe (T); wherein the sleeve (8) comprises a first joint (12), at the first end portion (9), and a mobile portion (13), extending between the first joint (12) and the second end portion (10), the first joint (12) enabling a rotation in the passage space (S) of the mobile portion (13) with respect to the first end portion (9);
**characterized in that** the mobile portion (13) comprises a second joint (14) at the second end portion (10) configured for enabling a rotation of the second end portion (10) in the passage space (S).

2. The self-propelled tower (1) according to claim 1, wherein the first joint (12) is configured for enabling the rotation of the mobile portion (13), the rotation being actuated by a movement of the self-propelled tower (1) with respect to the supply pipe (T), the supply pipe (T) being, in use, laid out on the agricultural land.

3. The self-propelled tower (1) according to claim 1 or 2, comprising a constraining mechanism configured for opposing the rotation of the mobile portion (13) so that the mobile portion (13) is angularly spaced from a direction travel of the self-propelled tower (1).

4. The self-propelled tower (1) according to claim 3, wherein the constraining mechanism comprises reciprocal end stops (15) to the rotation of the mobile portion (13), the end stops (15) being arranged on the frame (2) so as to limit the rotation of the mobile portion (13) within an angle of less than 180°, the end stops (15) limiting the rotation between two limit positions, one of the limit positions defining an angle greater than 0° between the mobile portion (13) and the direction of travel of the self-propelled tower (1) and the other of the limit positions defining an angle of less than 180° between the mobile portion (13) and the direction of travel of the self-propelled tower (1).

5. The self-propelled tower (1) according to any one of the preceding claims, comprising a rotation opposing system (16) operatively connected to the first joint (12) and operating on the rotation of the mobile portion (13) with respect to the first end portion (9) for selectively defining a free rotation configuration and an opposed rotation configuration.

6. The self-propelled tower (1) according to claim 5, wherein the rotation opposing system (16) comprises an abutment element (16a), movable between:
- a blocked position, corresponding to the opposed rotation configuration of the rotation opposing system (16), wherein the abutment element (16a) is configured for abutting against the mobile portion (13) of the sleeve (8),
- a released position, corresponding to the free rotation configuration of the rotation opposing system (16), wherein the abutment element (16a) is configured for not entering into contact with the sleeve (8).

7. The self-propelled tower (1) according to any one of the preceding claims, comprising a central displacing device (17) movable between two configurations:
- an activation configuration, wherein the central displacing device (17) is arranged, in use, to partly obstruct the passage space (S), and is configured for abutting against the supply pipe (T) during a movement of the self-propelled tower (1) with respect to the agricultural land, by shifting the supply pipe (T) laterally with respect to a direction of travel of the self-propelled tower (1), the supply pipe (T) being, in use, laid on the agricultural land,
- a deactivation configuration, in which the central displacing device (17) is configured so as not to interfere with the supply pipe (T).

8. The self-propelled tower (1) according to claim 7, wherein the central displacing device (17) comprises a second idle roller (17a) operatively connected to the frame (2) and movable between:
- an activation position in which the second idle roller (17a) is orientated perpendicularly with respect to the agricultural land and corresponding to the activation configuration of the central displacing device (17);
- a deactivation position corresponding to the deactivation configuration of the central displacing device (17);

9. The self-propelled tower (1) according to claim 7 or 8, when dependent at least on claim 5, comprising a movement system connected to the central displacing device (17), coordinated with the rotation opposing system (16) in such a way that the deactivation configuration of the central displacing device (17) corresponds to the opposed rotation configuration of the rotation opposing system (16) and the activation configuration of the central displacing device (17) corresponds to the free rotation configuration of the rotation opposing system (16).

10. The self-propelled tower (1) according to any one of the preceding claims, comprising at least a lateral displacing device (4) arranged along a direction of travel of the movement means and configured for abutting against the supply pipe (T) and shifting the supply pipe (T) laterally with respect to the direction of travel, preventing an interference between the movement means and the supply pipe (T).

11. The self-propelled tower (1) according to claim 10, wherein the lateral displacing device comprises an arm (4b) connected to the frame (2) and a first idle roller (4a) connected to the arm (4b), the first idle roller (4a) being, in a use, orientated perpendicularly with respect to the agricultural land, the arm (4b) being preferably mounted on the frame (2) so as to absorb any eventual accidental impacts.

12. The self-propelled tower (1) according to any one of the preceding claims, wherein the movement means comprise a plurality of wheels (4a), a motor apparatus connected to the wheels for transmitting a traction and a control system independent of the traction of at least a pair of wheels (4a) configured for maintaining, in use, a rectilinear trajectory of the self-propelled tower (1) following movements and stresses.

## Patentansprüche

1. Selbstfahrender Turm (1) für Bewässerungssysteme, anschließbar an ein Span-Beregnungssystem (C) ("Span" = Fachwerkspanne eines Auslegers), umfassend:
- einen Trägerrahmen (2);
- Bewegungsmittel, die mit dem Rahmen (2) verbunden sind, zum Bewegen des selbstfahrenden Turms (1) über landwirtschaftliche Nutzflächen;
- eine Rohrleitung (5), die von dem Rahmen (2) getragen wird und einen Endabschnitt (6) umfasst, der an das Span-Beregnungssystem (C) anschließbar ist;
- eine Muffe (8), die einen ersten Endabschnitt (9) umfasst, der mit der Rohrleitung (5) verbunden ist, und einen zweiten Endabschnitt (10) umfasst, der für die reversible und flüssigkeitsdichte Verbindung mit einem Versorgungsrohr (T) konfiguriert ist;
wobei die Muffe (8) und die Rohrleitung (5), im Gebrauch, konfiguriert sind, um eine Strömungsverbindung zwischen dem Versorgungsrohr (T) und dem Span-Beregnungssystem (C) herzustellen, die für die Wasserversorgung des Span-Beregnungssystems (C) ausgelegt ist;
wobei der selbstfahrende Turm (1), im Gebrauch, einen Durchgangsraum (S) parallel zu der landwirtschaftlichen Nutzfläche definiert, der für den Durchgang des Rohrs (T) ausreichend ist;
wobei die Muffe (8) ein erstes Gelenk (12), an dem ersten Endabschnitt (9), und einen beweglichen Abschnitt (13), zwischen dem ersten Gelenk (12) und dem zweiten Endabschnitt (10) umfasst, wobei das erste Gelenk (12) eine Drehbewegung des beweglichen Abschnitts (13) relativ zu dem ersten Endabschnitt (9) in dem Durchgangsraum (S) ermöglicht;
**dadurch gekennzeichnet, dass** der bewegliche Abschnitt (13) ein zweites Gelenk (14) an dem zweiten Endabschnitt (10) umfasst, das konfiguriert ist, um eine Drehbewegung des zweiten Endabschnitts (10) in dem Durchgangsraum (S) zu ermöglichen.

2. Selbstfahrender Turm (1) nach Anspruch 1, wobei das erste Gelenk (12) dafür ausgelegt ist, die Drehbewegung des beweglichen Abschnitts (13) zu ermöglichen, wobei die Drehbewegung durch eine Bewegung des selbstfahrenden Turms (1) relativ zu dem Versorgungsrohr (T) ausgeführt wird, wobei das Versorgungsrohr (T), im Gebrauch, auf der landwirtschaftlichen Nutzfläche ausgelegt ist.

3. Selbstfahrender Turm (1) nach Anspruch 1 oder 2, umfassend einen Beschränkungsmechanismus, der dafür konfiguriert ist, der Drehbewegung des beweglichen Abschnitts (13) entgegenzuwirken, so dass der bewegliche Abschnitt (13) in einem Winkelabstand von einer Fahrtrichtung des selbstfahrenden Turms (1) angeordnet ist.

4. Selbstfahrender Turm (1) nach Anspruch 3, wobei der Beschränkungsmechanismus gegenseitige Endanschläge (15) für die Drehbewegung des beweglichen Abschnitts (13) umfasst, wobei die Endanschläge (15) derart auf dem Rahmen (2) angeordnet sind, dass sie die Drehbewegung des beweglichen Abschnitts (13) innerhalb eines Winkels von weniger als 180° begrenzen, wobei die Endanschläge (15) die Drehung zwischen zwei Endlagen begrenzen, wobei eine der Endlagen einen Winkel größer als 0° zwischen dem beweglichen Abschnitt (13) und der Fahrtrichtung des selbstfahrenden Turms (1) definiert, und die andere der Endlagen einen Winkel kleiner als 180° zwischen dem beweglichen Abschnitt (13) und der Fahrtrichtung des selbstfahrenden Turms (1) definiert.

5. Selbstfahrender Turm (1) nach einem der vorhergehenden Ansprüche, umfassend ein Drehhemmungssystem (16), das mit dem ersten Gelenk (12) wirkverbunden ist und auf die Drehung des beweglichen Abschnitts (13) relativ zum ersten Endabschnitt (9) einwirkt, um wahlweise eine Konfiguration mit freier Drehung und eine Konfiguration mit gehemmter Drehung zu definieren.

6. Selbstfahrender Turm (1) nach Anspruch 5, wobei das Drehhemmungssystem (16) ein Anschlagelement (16a) umfasst, das beweglich ist zwischen:
- einer Blockierposition, die der Konfiguration mit gehemmter Drehung des Drehhemmungssystems (16) entspricht, in der das Anschlagelement (16a) dafür konfiguriert ist, gegen den beweglichen Abschnitt (13) der Muffe (8) anzuschlagen,
- einer Entblockierposition, die der Konfiguration mit freier Drehung des Drehhemmungssystems (16) entspricht, in der das Anschlagelement (16a) dafür konfiguriert ist, nicht in Berührung mit der Muffe (8) zu gelangen.

7. Selbstfahrender Turm (1) nach einem der vorhergehenden Ansprüche, umfassend eine mittlere Verschiebungsvorrichtung (17), die beweglich ist zwischen zwei Konfigurationen:
- einer Aktivierungskonfiguration, in der die mittlere Verschiebungsvorrichtung (17), im Gebrauch, derart angeordnet ist, dass sie den Durchgangsraum (S) teilweise versperrt, und konfiguriert ist, um gegen das Versorgungsrohr (T) anzuschlagen, während de selbstfahrende Turm (1) relativ zu der landwirtschaftlichen Nutzfläche bewegt wird, und das Versorgungsrohr (T) seitlich relativ zu der Fahrtrichtung des selbstfahrenden Turms (1) zu verschieben, wobei das Versorgungsrohr (T), im Gebrauch, auf der landwirtschaftlichen Nutzfläche ausgelegt ist,
- einer Deaktivierungskonfiguration, in der die mittlere Verschiebungsvorrichtung (17) konfiguriert ist, um nicht mit dem Versorgungsrohr (T) zu interferieren.

8. Selbstfahrender Turm (1) nach Anspruch 7, wobei die mittlere Verschiebungsvorrichtung (17) eine zweite Leerlaufrolle (17a) umfasst, die mit dem Rahmen (2) wirkverbunden und beweglich ist zwischen:
- einer Aktivierungsstellung, in der die zweite Leerlaufrolle (17a) lotrecht zur landwirtschaftlichen Nutzfläche ausgerichtet ist und die der Aktivierungskonfiguration der mittleren Verschiebungsvorrichtung (17) entspricht;
- einer Deaktivierungsstellung, die der Deaktivierungskonfiguration der mittleren Verschiebungsvorrichtung (17) entspricht.

9. Selbstfahrender Turm (1) nach Anspruch 7 oder 8, sofern zumindest von Anspruch 5 abhängig, umfassend ein Bewegungssystem, das mit der mittleren Verschiebungsvorrichtung (17) verbunden ist, und mit dem Drehhemmungssystem (16) derart koordiniert ist, dass die Deaktivierungskonfiguration der mittleren Verschiebungsvorrichtung (17) der Konfiguration mit gehemmter Drehung des Drehhemmungssystems (16) entspricht, und dass die Aktivierungskonfiguration der mittleren Verschiebungsvorrichtung (17) der Konfiguration mit freier Drehung des Drehhemmungssystems (16) entspricht.

10. Selbstfahrender Turm (1) nach einem der vorhergehenden Ansprüche, umfassend zumindest eine seitliche Verschiebungsvorrichtung (4), die entlang einer Fahrtrichtung der Bewegungsmittel angeordnet und dafür konfiguriert ist, gegen das Versorgungsrohr (T) anzuschlagen und das Versorgungsrohr (T) seitlich relativ zu der Fahrtrichtung zu verschieben, um Interferenzen zwischen den Bewegungsmitteln und dem Versorgungsrohr (T) zu verhindern.

11. Selbstfahrender Turm (1) nach Anspruch 10, wobei die seitliche Verschiebungsvorrichtung einen Arm (4b) umfasst, der mit dem Rahmen (2) verbunden ist, und eine erste Leerlaufrolle (4a), die mit dem Arm (4b) verbunden ist, wobei die erste Leerlaufrolle (4a), im Gebrauch, lotrecht zu der landwirtschaftlichen Nutzfläche angeordnet ist, wobei der Arm (4b) vorzugsweise auf dem Rahmen (2) montiert ist, um eventuelle versehentliche Stöße zu absorbieren.

12. Selbstfahrender Turm (1) nach einem der vorhergehenden Ansprüche, wobei die Bewegungsmittel eine Vielzahl von Rädern (3), eine mit den Rädern verbundene Antriebsvorrichtung zur Traktionsübertragung und ein unabhängiges Steuersystem zur Steuerung der Traktion von zumindest einem Paar von Rädern (3) umfasst, das dafür konfiguriert ist, im Gebrauch eine geradlinige Bewegungsbahn des selbstfahrenden Turms (1) infolge von Bewegungen und Beanspruchungen beizubehalten.

## Revendications

1. Une colonne autopropulsée (1) pour systèmes d'irrigation, pouvant être raccordée à un système d'irrigation à travées (C), comprenant:
- un châssis de support (2);
- des moyens de déplacement reliés au châssis (2) pour déplacer la colonne autopropulsée (1) sur un terrain agricole;
- un conduit (5), supporté par le châssis (2), comprenant une portion d'extrémité (6) pouvant être raccordée au système d'irrigation à travées (C);
- un manchon (8) comprenant une première portion d'extrémité (9), raccordée au conduit (5), et une deuxième portion d'extrémité (10), configurée pour un raccordement réversible et étanche au fluide avec un conduit d'alimentation (T);
ledit manchon (8) et ledit conduit (5) étant configurés, en utilisation, pour établir une communication de flux entre le conduit d'alimentation (T) et le système d'irrigation à travées (C), destinée à l'alimentation en eau du système d'irrigation à travées (C);
où la colonne autopropulsée (1) définit, en utilisation, un espace de passage (S) parallèle au terrain agricole suffisant pour un passage du conduit (T);
où le manchon (8) comprend une première articulation (12), au niveau de la première portion d'extrémité (9), et une portion mobile (13), s'étendant entre la première articulation (12) et la deuxième portion d'extrémité (10), la première articulation (12) permettant une rotation dans l'espace de passage (S) de la portion mobile (13) par rapport à la première portion d'extrémité (9);
**caractérisée en ce que** la portion mobile (13) comprend une deuxième articulation (14) au niveau de la deuxième portion d'extrémité (10) configurée pour permettre une rotation de la deuxième portion d'extrémité (10) dans l'espace de passage (S).

2. La colonne autopropulsée (1) selon la revendication 1, dans laquelle la première articulation (12) est configurée pour permettre la rotation de la portion mobile (13), la rotation étant mise en œuvre par un mouvement de la colonne autopropulsée (1) par rapport au conduit d'alimentation (T), le conduit d'alimentation (T) étant, en utilisation, étendu sur le terrain agricole.

3. La colonne autopropulsée (1) selon la revendication 1 ou 2, comprenant un mécanisme de contrainte configuré pour s'opposer à la rotation de la portion mobile (13) de manière à ce que la portion mobile (13) soit angulairement espacée d'un sens de marche de la colonne autopropulsée (1).

4. La colonne autopropulsée (1) selon la revendication 3, dans laquelle le mécanisme de contrainte comprend des butées réciproques de fin de course (15) à la rotation de la portion mobile (13), les butées de fin de course (15) étant disposées sur le châssis (2) de manière à limiter la rotation de la portion mobile (13) dans un angle inférieur à 180°, les butées de fin de course (15) limitant la rotation entre deux positions limites, l'une des positions limites définissant un angle supérieur à 0° entre la portion mobile (13) et le sens de marche de la colonne autopropulsée (1) et l'autre des positions limites définissant un angle inférieur à 180° entre la portion mobile (13) et le sens de marche de la colonne autopropulsée (1).

5. La colonne autopropulsée (1) selon l'une quelconque des revendications précédentes, comprenant un système d'opposition à la rotation (16) opérationnellement relié à la première articulation (12) et agissant sur la rotation de la portion mobile (13) par rapport à la première portion d'extrémité (9) pour définir sélectivement une configuration de rotation libre et une configuration de rotation opposée.

6. La colonne autopropulsée (1) selon la revendication 5, dans laquelle le système d'opposition à la rotation (16) comprend un élément de butée (16a), mobile entre:
- une position bloquée, correspondant à la configuration de rotation opposée du système d'opposition à la rotation (16), dans laquelle l'élément de butée (16a) est configuré pour venir buter contre la portion mobile (13) du manchon (8),
- une position débloquée, correspondant à la configuration de rotation libre du système d'opposition à la rotation (16), dans laquelle l'élément de butée (16a) est configuré pour ne pas venir en contact avec le manchon (8).

7. La colonne autopropulsée (1) selon l'une quelconque des revendications précédentes, comprenant un dispositif de décalage central (17) mobile entre deux configurations:
- une configuration d'activation, dans laquelle le dispositif de décalage central (17) est disposé, en utilisation, pour boucher partiellement l'espace de passage (S), et est configuré pour venir buter contre le conduit d'alimentation (T) pendant un mouvement de la colonne autopropulsée (1) par rapport au terrain agricole, en décalant le conduit d'alimentation (T) latéralement par rapport à un sens de marche de la colonne autopropulsée (1), le conduit d'alimentation (T) étant, en utilisation, étendu sur le terrain agricole,
- une configuration de désactivation, dans laquelle le dispositif de décalage central (17) est configuré de manière à ne pas interférer avec le conduit d'alimentation (T).

8. La colonne autopropulsée (1) selon la revendication 7, dans laquelle le dispositif de décalage central (17) comprend un deuxième rouleau fou (17a) opérationnellement relié au châssis (2) et mobile entre:
- une position d'activation dans laquelle le deuxième rouleau fou (17a) est orienté perpendiculairement par rapport au terrain agricole et correspondant à la configuration d'activation du dispositif de décalage central (17);
- une position de désactivation correspondant à la configuration de désactivation du dispositif de décalage central (17).

9. La colonne autopropulsée (1) selon la revendication 7 ou 8, quand dépendant au moins de la revendication 5, comprenant un système de déplacement relié au dispositif de décalage central (17), coordonné avec le système d'opposition à la rotation (16) de manière à ce que la configuration de désactivation du dispositif de décalage central (17) corresponde à la configuration de rotation opposée du système d'opposition à la rotation (16) et la configuration d'activation du dispositif de décalage central (17) corresponde à la configuration de rotation libre du système d'opposition à la rotation (16).

10. La colonne autopropulsée (1) selon l'une quelconque des revendications précédentes, comprenant au moins un dispositif de décalage latéral (4) disposé le long d'un sens de marche des moyens de déplacement et configuré pour venir buter contre le conduit d'alimentation (T) et décaler le conduit d'alimentation (T) latéralement par rapport au sens de marche, en empêchant une interférence entre les moyens de déplacement et le conduit d'alimentation (T).

11. La colonne autopropulsée (1) selon la revendication 10, dans laquelle le dispositif de décalage latéral comprend un bras (4b) relié au châssis (2) et un premier rouleau fou (4a) relié au bras (4b), le premier rouleau fou (4a) étant, lors d'une utilisation, orienté perpendiculairement par rapport au terrain agricole, le bras (4b) étant de préférence monté sur le châssis (2) de manière à absorber d'éventuels chocs accidentels.

12. La colonne autopropulsée (1) selon l'une quelconque des revendications précédentes, dans laquelle les moyens de déplacement comprennent une pluralité de roues (3), un appareil moteur relié aux roues pour transmettre une traction et un système de contrôle indépendant de la traction d'au moins une paire de roues (3) configuré pour maintenir, en utilisation, une trajectoire rectiligne de la colonne autopropulsée (1) à la suite de mouvements et de sollicitations.
